(19) Europäisches Patentamt
European Patent Office
Office européen des brevets

(11) **EP 3 625 766 B1**

(12) **FASCICULE DE BREVET EUROPEEN**

(45) Date de publication et mention
de la délivrance du brevet:
**09.06.2021 Bulletin 2021/23**

(21) Numéro de dépôt: **19718167.0**

(22) Date de dépôt: **16.04.2019**

(51) Int Cl.:
*G06T 7/00* *(2017.01)*    *G06T 5/00* *(2006.01)*

(86) Numéro de dépôt international:
**PCT/EP2019/059834**

(87) Numéro de publication internationale:
**WO 2019/211094 (07.11.2019 Gazette 2019/45)**

(54) **MÉTHODE DE DÉTECTION ET DE QUANTIFICATION DU FLOU DANS UNE IMAGE NUMÉRIQUE**

VERFAHREN ZUR DETEKTION UND QUANTIFIZIERUNG VON UNSCHÄRFE AUF EINEM DIGITALBILD

METHOD OF DETECTING AND QUANTIFYING BLUR IN A DIGITAL IMAGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.05.2018 FR 1853848**

(43) Date de publication de la demande:
**25.03.2020 Bulletin 2020/13**

(73) Titulaire: **Imginit**
**75014 Paris (FR)**

(72) Inventeurs:
• **AMEISEN, David**
**75014 PARIS (FR)**
• **AMEISEN, Emmanuel**
**SAN FRANCISCO, 94107 (US)**

(74) Mandataire: **Argyma**
**14 Boulevard de Strasbourg**
**31000 Toulouse (FR)**

(56) Documents cités:
**WO-A1-2012/080643    US-A1- 2003 151 674**
**US-A1- 2015 207 978**

• **CIANCIO A ET AL: "No-Reference Blur Assessment of Digital Pictures Based on Multifeature Classifiers", IEEE TRANSACTIONS ON IMAGE PROCESSING, IEEE SERVICE CENTER, PISCATAWAY, NJ, US, vol. 20, no. 1, 1 janvier 2011 (2011-01-01), pages 64-75, XP011328674, ISSN: 1057-7149, DOI: 10.1109/TIP.2010.2053549**
• **VIPIN KAMBLE ET AL: "No-reference image quality assessment algorithms: A survey", OPTIK., vol. 126, no. 11-12, 1 juin 2015 (2015-06-01), pages 1090-1097, XP055272681, DE ISSN: 0030-4026, DOI: 10.1016/j.ijleo.2015.02.093**
• **ANISH MITTAL ET AL: "Blind/Referenceless Image Spatial Quality Evaluator", SIGNALS, SYSTEMS AND COMPUTERS (ASILOMAR), 2011 CONFERENCE RECORD OF THE FORTY FIFTH ASILOMAR CONFERENCE ON, IEEE, 6 novembre 2011 (2011-11-06), pages 723-727, XP032172195, DOI: 10.1109/ACSSC.2011.6190099 ISBN: 978-1-4673-0321-7**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

# EP 3 625 766 B1

**Description**

## DOMAINE TECHNIQUE GENERAL ET ART ANTERIEUR

La présente invention concerne une méthode de détection et de quantification du flou dans une image numérique et un programme d'ordinateur pour sa mise en œuvre.

Dans de nombreux domaines où l'analyse d'image joue un rôle, par exemple l'imagerie médicale, l'imagerie satellitaire, la conduite autonome, la surveillance, la défense, les réseaux sociaux, la gestion de données « big data », les réseaux de neurones, les services de stockage d'images, etc. il est important de pouvoir déterminer quelles images sont floues et à quel point elles le sont. La question est en général de déterminer les images utilisables, par exemple en vue d'un diagnostic.

Autrefois, l'évaluation était réalisée sur des images réelles, par l'œil de l'expert. De nos jours, les images sont, ou peuvent être, numérisées, c'est-à-dire discrétisées en pixels ou points élémentaires de l'image. A chaque pixel est associé un ou plusieurs paramètres numériques permettant de donner sa valeur colorimétrique au pixel, selon un codage prédéterminé. On connaît par exemple le codage TSB (teinte, saturation, brillance ; en anglais : HSB, pour *hue, saturation, brightness*), ou sa variante TSV (teinte, saturation, valeur ; en anglais : HSV, pour *hue, saturation, value*).

Différentes techniques existent déjà pour quantifier le flou d'une image numérique. Se pose alors le problème du temps de calcul, qui doit être d'autant plus bref qu'on doit traiter beaucoup d'images, et celui de la pertinence du résultat. Il existe notamment des méthodes pour tester la netteté d'une image simple. Certaines méthodes sont rapides au point de vue des calculs (de l'ordre de 100 ms par image de 512x512 pixels), mais peu fiables (autofocus d'appareil photo, analyse de l'intensité des couleurs). Ces méthodes permettent assez efficacement de comparer un certain nombre d'images et d'en choisir la plus nette, mais sans pouvoir mesurer de manière absolue la netteté.

D'autres méthodes (transformée de Fourier, transformée par ondelettes) sont plus complexes et plus lentes au point de vue des calculs (de l'ordre de 500 ms à 3s par image de 512x512 pixels) et présentent d'autres inconvénients (impossibilité de différencier une image unie d'une image floue).

Il existe de nombreux articles traitant de la détection du flou dans les images numériques. On peut citer notamment « Blur Detection for Digital Images Using Wavelet Transform de HANGHANG TONG; MINGJING LI ; HONGJIANG ZHANG ; CHANGSHUI ZHANG ; 2004 IEEE International Conférence on multimedia and expo : ICME 27-30/06/2004, Taipei, Taiwan ». Cet article présente un algorithme de détection du flou par la transformée en ondelettes. L'analyse est également une fonction du carré du nombre de pixels. Ainsi, le temps de calcul pour une image est de l'ordre d'une seconde. De plus, les images floues utilisées pour les tests ont été produites en utilisant des images sources nettes, sur lesquelles ont été appliqués différents types de flou numériques (matrices de flou). Or, un flou numérique est beaucoup plus facile à détecter de manière très fiable qu'un flou « analogique », dû par exemple à un défaut de mise au point, ou un mouvement imprévu, lors de l'acquisition de l'image. Une autre méthode est divulguée dans US 2003/0151674.

Afin d'éliminer ces inconvénients, il a été proposé une méthode de quantification du flou par la demande de brevet WO2012/080643 dans laquelle un deuxième score est calculé à partir d'un quotient. Une telle méthode a permis d'améliorer la quantification du flou. Néanmoins, le flou quantifié de manière objective par le deuxième score est encore trop éloigné du flou quantifié de manière subjective par un utilisateur. De plus, pour des images comportant plusieurs milliards de pixels, la quantification du flou est encore trop lente. En outre, une telle méthode dépend d'un seuil de brillance défini de manière arbitraire, ce qui impacte l'objectivité des résultats.

La quantification du flou demeure une problématique importante et des solutions diverses ont été proposées, par exemple, "SlideNet: Fast and Accurate Slide Quality Assessment Based on Deep Neural Networks", Teng Zhang, Johanna Carvajal, Daniel F. Smith, Kun Zhao, Arnold Wiliem, Peter Hobson, Anthony Jennings, Brian C. Lovell, ou "No-Reference Blur Assessment of Digital Pictures Based on Multifeature Classifiers", Alexandre Ciancio, André Luiz N Targino Targino da Costa, Eduardo A. B. da Silva, Amir Said, Ramin Samadani, Pere Obrador.

La présente invention a pour but de remédier à tout ou partie des inconvénients mentionnés ci-dessus, c'est-à-dire en particulier de fournir une méthode de quantification du flou encore plus rapide, plus pertinente et au moins aussi fiable, sinon plus, que les méthodes existantes, en particulier pour un flou de type « analogique ».

## PRESENTATION GENERALE DE L'INVENTION

A cet effet, l'invention concerne une méthode de détection et de quantification du flou dans une image numérique mettant en oeuvre un ordinateur et comprenant :

- une étape a) d'obtention d'une image numérique comprenant des pixels et des paramètres de codage colorimétrique associés aux pixels ;
- une étape b) d'obtention d'un paramètre de brillance pour chaque pixel à partir de l'image numérique, l'étape b) comprenant une opération de convolution avec une matrice de détection de bords ;

- une étape c) de calcul d'un score S1 comprenant le maximum, calculé sur tous les pixels, du paramètre de brillance obtenu à l'étape b) ; et
- une étape d) d'évaluation de l'image numérique, l'image numérique étant considérée comme floue si le score S1 obtenu à l'étape c) est strictement inférieur à un premier seuil prédéterminé $S1_0$, le score S1 fournissant une première quantité de flou présente dans l'image numérique.

La méthode est remarquable en que, à l'étape c), on calcule un deuxième score S2 comprenant une fonction logistique f(x) définie de manière suivante

$$f(x) = A + \frac{K - A}{(C + Qe^{-B(x-M)})^{1/V}}$$

dans laquelle

- le paramètre V est une constante de croissance maximale,
- le paramètre A est une constante d'asymptote minimale,
- le paramètre C est une constante de décalage,
- le paramètre Q est une constante de post-amplification,
- le paramètre K est une constante d'asymptote maximale,
- le paramètre B est une constante de pré-amplification,
- le paramètre M est une constante d'initialisation,
- x correspond à la somme, calculée sur tous les pixels, des paramètres de brillance obtenus à l'étape b), chacun divisé par une constante de calibration et par le nombre de pixels analysés, la constante de calibration étant définie de manière à ce que le paramètre x soit compris entre 0 et 1,
- à l'étape d), l'image numérique est également considérée comme floue si le score S2 obtenu à l'étape c) est strictement inférieur à un deuxième seuil prédéterminé $S2_0$, le score

S2 fournissant en outre une deuxième quantité de flou présente dans l'image numérique. Grâce à l'invention, on obtient un score S2 pertinent qui permet de refléter de manière optimale la quantité de flou ressentie de manière subjective. On dispose ainsi de deux scores différents S1, S2 pour mesurer le flou. En outre, l'absence de traitement de seuils de brillance permet d'augmenter la vitesse de calcul du score S2, ce qui permet de traiter une grande quantité de pixels de manière rapide et fiable. Cela est particulièrement avantageux lorsque l'image à traiter comporte plusieurs milliards de pixel, par exemple, dans le domaine médical, de la défense ou autre. Le score S2 permet avantageusement de s'affranchir d'un seuil de brillance, ce qui permet de rendre la méthode moins arbitraire, plus générique et plus rapide.

De préférence, la fonction logistique f(x) est une fonction sigmoïde fs(x) définie de manière suivante :

$$fs(x) = \frac{K}{(1 + e^{-B(x-M)})}$$

Une telle fonction sigmoïde est une fonction logistique particulière qui peut être calculée à grande vitesse. Le flou peut ainsi être quantifié de manière optimale.

De manière préférée, les paramètres de la fonction sigmoïde fs(x) sont définis de manière suivante :

- K est compris entre 0.1 et 4.5, de préférence, entre 0.8 et 1.2
- B est compris entre 0.1 et 1000, de préférence, entre 8 et 12
- M est compris entre 0 et 0.999, de préférence, entre 0 et 0.06.

De préférence encore, les paramètres de la fonction sigmoïde fs(x) sont définis de manière suivante :

- K est compris entre 0.9 et 1.1
- B est compris entre 9 et 11
- M est compris entre 0.027 et 0.033.

De tels paramètres sont très pertinents pour quantifier un flou de manière objective.

Selon un aspect préféré de l'invention, la constante de calibration est définie de manière à ce que le paramètre x soit compris entre 0 et 1. De préférence, la constante de calibration est le maximum de brillance. Le but de la constante de calibration est de normaliser le paramètre x de manière à ce que le paramètre x normalisé appartienne à un intervalle déterminé, ici, compris entre 0 et 1. Si le paramètre de brillance varie entre 0 et 255, il est préférable de choisir une constante de calibration valant 255. Si le paramètre de brillance varie entre 0 et 1, il est préférable de choisir une constante de calibration valant 1.

De manière préférée, l'image numérique est considérée comme totalement nette si les scores S1 et S2 sont supérieurs ou égaux à leurs seuils prédéterminés respectifs $S1_0$ et $S2_0$, comme partiellement nette si le score S1 est supérieur ou égal au premier seuil prédéterminé $S1_0$ et le score S2 est strictement inférieur au deuxième seuil prédéterminé $S2_0$, ou comme totalement floue si les scores S1 et S2 sont strictement inférieurs à leurs seuils prédéterminés respectifs $S1_0$ et $S2_0$.

De préférence, le deuxième score S2 étant exprimé en pourcentage, le deuxième seuil prédéterminé $S2_0$ est compris entre 0% et 100%, de préférence, entre 50% et 100%, de préférence encore entre 70% et 90%.

De manière préférée, le paramètre de brillance est la brillance au sens du codage « teinte, saturation, brillance » (TSB).

De préférence, le paramètre de brillance et le score S1 sont exprimés en pourcentage. Le premier seuil prédéterminé $S1_0$ est compris entre 90% et 100%, de préférence entre 95% et 99,5%.

De manière préférée, on ordonne des images en fonction de leur niveau de flou en utilisant conjointement les valeurs exactes des scores S1 et S2.

De préférence, on détermine la présence d'au moins une zone nette et au moins une zone floue dans une image en utilisant conjointement les valeurs exactes des scores S1 et S2.

L'invention concerne également un produit de type programme d'ordinateur, comprenant au moins une séquence d'instructions stockée et lisible par un processeur et qui, une fois lue par ce processeur, provoque la réalisation des étapes b), c) et d) de la méthode telle que présentée précédemment. La séquence d'instructions est configurée pour être appliquée à une image numérique comprenant des pixels et des paramètres de codage colorimétrique associés aux pixels.

De manière préférée, l'invention concerne également un produit de type programme d'ordinateur, comprenant au moins une séquence d'instructions stockée et lisible par un processeur et qui, une fois lue par ce processeur, provoque la réalisation des étapes a), b), c) et d) de la méthode telle que présentée précédemment.

L'invention concerne en outre un support lisible par un ordinateur comportant le produit tel que présenté précédemment.

## PRESENTATION DES FIGURES

L'invention sera mieux comprise à la lecture de la description qui va suivre, donnée uniquement à titre d'exemple, et se référant aux dessins annexés sur lesquels :

- la figure 1 illustre une mise en oeuvre d'une méthode de détection et de quantification de flou dans une image numérique et
- les figures 2 à 4 sont respectivement des photos avec une quantité de flou moyenne, grande et faible.

Il faut noter que les figures exposent l'invention de manière détaillée pour mettre en oeuvre l'invention, lesdites figures pouvant bien entendu servir à mieux définir l'invention le cas échéant.

## DESCRIPTION D'UN OU PLUSIEURS MODES DE REALISATION ET DE MISE EN OEUVRE

La solution de l'invention porte sur une méthode de détection et de quantification du flou dans une image numérique mettant en oeuvre un ordinateur et comprenant :

- une étape a) d'obtention d'une image numérique comprenant des pixels et des paramètres de codage colorimétrique associés aux pixels ;
- une étape b) d'obtention d'un paramètre de brillance pour chaque pixel à partir de l'image numérique, l'étape b) comprenant une opération de convolution avec une matrice de détection de bords ;
- une étape c) de calcul d'un score S1 comprenant le maximum, calculé sur tous les pixels, du paramètre de brillance obtenu à l'étape b) ; et
- une étape d) d'évaluation de l'image numérique, l'image numérique étant considérée comme floue si le score S1 obtenu à l'étape c) est strictement inférieur à un premier seuil prédéterminé, le score S1 fournissant une première quantité de flou présente dans l'image numérique.

Par « obtention d'une image numérique », on entend qu'on se procure une image numérique. Celle-ci peut être préexistante ou bien elle peut être générée par tout moyen approprié connu de l'homme du métier, comme une caméra CCD. Chaque pixel est une partie élémentaire de l'image numérique. En général, l'image est en deux dimensions (2D), c'est-à-dire que les pixels peuvent être repérés par deux coordonnées x et y. A chaque pixel sont associés des paramètres de codage colorimétrique. Les plus connus sont le codage RVB (pour « rouge, vert, bleu ») ou *RGB* en anglais (pour « *red, green, blue* »). Citons aussi le TSV (pour « teinte, saturation, valeur ») et son analogue, le TSB (« teinte, saturation, brillance »), connus en anglais sous les sigles HSVet *HSB* (*hue, saturation, value* et *hue, saturation, brightness*). Ces systèmes de codage sont en général analogues et on peut passer de l'un à l'autre par des relations de conversion connues. La brillance est analogue à la luminosité.

L'image peut avoir une forme quelconque. Elle est en général rectangulaire ou carrée. On peut la représenter par une matrice associant à chaque pixel ses paramètres colorimétriques. En effet, même si l'image n'est pas rectangulaire, on peut toujours ajouter des pixels « manquants » et leur attribuer des paramètres neutres. Ceci revient, par exemple, pour une image ronde, à ajouter des coins. Dans cet exemple, l'image est représentée de manière matricielle mais il va de soi que d'autres représentations sont possibles. Il serait tout à fait équivalent, pour la méthode selon l'invention, de réaliser les mêmes calculs sans les représenter matriciellement. La représentation matricielle est appréciée, car elle se prête facilement à une programmation informatique et permet d'exprimer les calculs de façon condensée. Toutefois, ce qui importe n'est pas la forme du calcul, mais bien plutôt sa fonction et son résultat.

Après l'étape a) d'acquisition (ou obtention) d'une image numérique, on calcule à l'étape b) un paramètre de brillance pour chaque pixel.

L'étape b) comprend un détourage de l'image numérique (pour faire ressortir les bords) et une extraction d'un paramètre de brillance par pixel. Le détourage s'obtient par une opération de convolution avec une matrice de détection de bords.

Une image peut être représentée par une matrice M pour laquelle chaque valeur M(x,y) équivaut à la valeur du pixel de l'image à la position (x,y). Cette matrice est également équivalente à une fonction à deux dimensions f(x,y), qui pour chaque valeur de x et de y, est égale à la valeur du pixel à la position (x,y). Soit lum(f(x,y)) la fonction extrayant valeur de la luminosité du pixel f(x,y). On peut détecter qu'un pixel (x,y) d'une image est un bord quand la valeur de la norme du gradient de lum(f(x,y)) est supérieure à un certain seuil ($S_{lum}$) en (x,y). (|grad lum(f(x,y))|> $S_{lum}$). En conservant les valeurs supérieures à un seuil $S_{lum}$ du gradient de l'intensité des pixels de l'image, on détecte les pixels appartenant à des bords d'une image. (par exemple, avec $S_{lum}$ = 20/255)

Une autre manière, plus efficace, est de détecter qu'un pixel (x,y) d'une image est un bord quand la valeur de la norme du gradient de la matrice M a un maximum local en (x,y), c'est à dire quand |grad lum(f(x,y))| > 0 et quand la valeur du laplacien de lum(f(x,y)) est nulle en (x,y). (grad$^2$ lum(f(x,y)) =0). En conservant les maxima locaux du gradient de l'intensité des pixels de l'image, on détecte les pixels appartenant à des bords d'une image.

Voici quelques exemples de matrices de détection de bords :

Matrice de Laplace octogonale :

$$MDB = \begin{matrix} -1 & -1 & -1 \\ -1 & 8 & -1 \\ -1 & -1 & -1 \end{matrix}$$

Matrice de Laplace carrée :

$$MDB = \begin{matrix} 0 & 1 & 0 \\ 1 & -4 & 1 \\ 0 & 1 & 0 \end{matrix}$$

Matrice de Sobel :

$$MDB = \begin{matrix} 1 & 0 & -1 \\ 2 & 0 & -2 \\ 1 & 0 & -1 \end{matrix}$$

Matrice de Prewitt:

$$MDB = \begin{matrix} 1 & 0 & -1 \\ 1 & 0 & -1 \\ 1 & 0 & -1 \end{matrix}$$

L'extraction d'une valeur de brillance se fait à partir du codage colorimétrique des pixels, qui contient cette information. Le produit de convolution d'une matrice (l'image numérique) par une deuxième matrice (noyau de convolution, ici une matrice de détection de bords) est une matrice (représentant ici l'image de détection de bords, c'est-à-dire une image détourée) dans laquelle la valeur de chaque pixel est une combinaison linéaire de la valeur du pixel considéré et de celle de ses voisins. La deuxième matrice (matrice de détection de bords) contient les coefficients de la combinaison linéaire. La combinaison linéaire vise à faire ressortir les bords, au sens précisé ci-dessus, contenus dans l'image numérique de départ. Nous donnons ci-après un exemple de calcul.

Soit M une première matrice, de dimension (Ma, Mb) (avec Ma lignes et Mb colonnes), représentant l'un des composants de l'image (la luminosité par exemple), et soit MDB une deuxième matrice, de dimension (MDBa,MDBb), (avec MDBa lignes et MDBb colonnes), la matrice de détection de bords. Par convention, les coordonnées de MDB ont été disposées par rapport à son centre, si ses dimensions sont impaires, ou par rapport à la colonne et la ligne qui sont à la fois les plus proches du centre et les moins éloignés de la première coordonnée de la matrice, si ses dimensions sont paires.

Exemple : pour

$$MDB = \begin{matrix} 0 & -1 & 0 \\ -1 & 4 & -1 \\ 0 & -1 & 0 \end{matrix}$$

de dimension 3x3, la numérotation est la suivante :

MDB1(-1,-1)=0, MDB1(-1,0)=-1, MDB1(-1,1)=0,
MDB1(0,-1)=-1, MDB1 (0,0)=4, MDB1(0,1)=-1,
MDB1(1,-1)= 0, MDB1(1,0)=-1, MDB1(1,1)=0.

Soit M' la matrice, de dimension (Ma,Mb) résultant de la convolution des matrices M et MDB. Pour calculer M', nous procédons comme suit :

$$M'(x,y) = \sum_{(m>-MDBa/2)}^{(MDBa/2)} \sum_{(n>-MDBb/2)}^{(MDBb/2)} MDB(m,n) * M(x+m, y+n)$$

Avec m entier, compris dans l'intervalle]-MDBa/2 ;MDBa/2], n entier, compris dans l'intervalle]-MDBb/2 ; MDBb/2], x entier compris dans l'intervalle [0 ; Ma-1], y entier compris dans l'intervalle [0; Mb-1].

De plus, M'(x,y)=0 avec x<MDBa/2-1 ou y<MDBb/2-1, ou x≥Ma-1-(MDBa/2-1) ou y≥Mb-1-(MDBb/2-1). Enfin, M'(x,y) n'est pas défini pourx<0 ou y<0 ou x>Ma-1 ou y>Mb-1.

Ainsi, la convolution de l'image complète avec la matrice de détection de bords aura pour résultat une nouvelle image, dont chacun des composants (rouge, vert, bleu, ou teinte, saturation, luminosité par exemple) auront été convolués avec la matrice de détection de bords. Une telle étape b) est connue de l'homme du métier par la demande de brevet WO2012/080643.

A l'étape c), on calcule un score (ou résultat) S1 qui comprend le maximum, calculé sur tous les pixels, du paramètre de brillance obtenu à l'étape b). Le score S1 peut être égal à ce maximum (cas le plus simple), mais il est clair qu'un multiple de ce maximum, ou plus généralement la transformation de ce maximum par une fonction monotone conviendrait également.

L'étape d) est l'étape de détection. L'image est considérée comme floue si le score S1 est strictement inférieur à un premier seuil prédéterminé $S1_0$. La détermination de ce premier seuil $S1_0$ résulte en général de l'expérience. Sa valeur peut dépendre du type d'image numérique considéré et de la sévérité que l'on souhaite donner au critère de détection de flou.

En outre, le paramètre S1 fournit une première quantité de flou dans l'image. Plus exactement, c'est 1 moins S1 (1-S1) qui quantifie le flou, car plus S1 est faible, plus le flou est grand.

Des tests ont montré que la méthode fournit des résultats conformes à ce que l'œil humain considère comme plus ou moins flou, en particulier dans le cas du flou « analogique », dû à une mise au point déficiente d'un appareil à focalisation, par exemple un microscope optique.

En outre, la méthode est rapide et permet de traiter un grand nombre d'images. La plupart des algorithmes de calcul utilisés dans l'art antérieur (transformée de Fourier, ondelettes, ...etc.) nécessitent un temps de calcul en N au carré, N étant le nombre de pixels, alors que la méthode selon l'invention est linéaire (temps de calcul proportionnel à N). En outre, la méthode est absolue, car elle ne nécessite pas de comparer l'image avec une image étalon.

La méthode, appliquée à la question de la focalisation d'un appareil de production d'image, permet de corriger rapidement une focalisation incorrecte (correction du flou « analogique »). Les étapes b) et c) mettent en œuvre un ordinateur.

Selon des modes de réalisations particuliers, l'invention peut mettre en œuvre une ou plusieurs des caractéristiques suivantes :

- l'étape b) est une étape b1) de convolution de l'image numérique avec la matrice de détection de bords pour obtenir une image de détection de bords et d'extraction dudit paramètre de brillance pour chaque pixel à partir de l'image de détection de bords. Dans l'étape b1), la convolution a lieu avant l'extraction de la brillance.
- l'étape b) est une étape b2) d'extraction d'une valeur de brillance pour chaque pixel à partir de l'image numérique pour obtenir une matrice de brillance et de convolution de la matrice de brillance avec la matrice de détection de bords pour obtenir ledit paramètre de brillance pour chaque pixel. L'étape b2) est une alternative à l'étape b1), où la convolution a lieu après l'extraction de la brillance. Elle conduit en général au même résultat, avec l'avantage de réduire la quantité de calculs, car la convolution ne porte par sur tous les paramètres de l'image numérique, mais seulement la brillance.
- le paramètre de brillance est la brillance au sens du codage « teinte, saturation, brillance » (TSB). Parmi toutes les définitions possibles d'une brillance ou d'une luminosité, la brillance au sens du codage TSB donne de bons résultats. En outre, si l'image numérique est directement codée en TSB, les calculs d'extraction du paramètre B sont triviaux.
- le paramètre de brillance et le score S1 étant exprimés en pourcentage, le premier seuil prédéterminé est compris entre 90% et 100%, de préférence entre 95% et 99,5%. Ces plages sont des plages préférées pour le flou de type « analogique », en ce sens que le score S1 conduit alors, sur un grand nombre d'images tests, à des résultats conformes à ce que l'œil humain considère comme flou ou net.
- le premier seuil prédéterminé est compris entre 97% et 99%. Ces plages sont encore plus préférées dans le cas du flou « analogique ».

Dans l'étape b1), on convolue d'abord l'image numérique avec une matrice de détection de bords (MDB). En termes matriciels, on calcule le produit de convolution de la matrice représentant l'image numérique avec une matrice dite de « détection de bords ». Le résultat de la convolution est une nouvelle matrice, représentant une image de détection de bords. La fonction de ce calcul est de détourer l'image numérique, c'est-à-dire de renforcer les bords. Le résultat est une nouvelle image, où les bords sont renforcés.

Ensuite, à partir de l'image de détection de bords (ou de sa matrice représentative), on extrait pour chaque pixel de cette image, un paramètre de brillance. En pratique, on part des paramètres colorimétriques et on calcule un paramètre de brillance. Si le codage est le TSB, cela revient à ne conserver que le « B » (brillance). Si on a utilisé un autre codage, les calculs sont plus compliqués, mais ne posent pas de problème particulier.

L'étape b2) est une alternative possible à l'étape b1). Elle se distingue par le fait que l'on commence par extraire une valeur de brillance pour chaque pixel. On se retrouve avec une image de brillance, représentée par une matrice de brillance. Puis on convolue, cette matrice de brillance avec une matrice de détection de bords. On obtient ainsi pour chaque pixel un paramètre de brillance. Cette alternative est équivalente du point de vue de la fonction et du résultat, et nécessite en général moins de calculs, puisque la convolution ne porte que sur une matrice à un paramètre colorimétrique (valeur de brillance) au lieu de porter sur une matrice plus épaisse comportant plusieurs paramètres pour chaque pixel.

Selon l'invention, à l'étape c), on calcule un score S2 comprenant une fonction logistique f(x) définie de manière suivante

$$f(x) = A + \frac{K - A}{(C + Qe^{-B(x-M)})^{1/V}}$$

dans laquelle

- le paramètre V est une constante de croissance maximale
- le paramètre A est une constante d'asymptote minimale

- le paramètre C est une constante de décalage
- le paramètre Q est une constante de postamplification
- le paramètre K est une constante d'asymptote maximale
- le paramètre B est une constante de préamplification
- le paramètre M est une constante d'initialisation
- x correspond à la somme, calculée sur tous les pixels, des paramètres de brillance obtenus à l'étape b), chacun divisé par une constante de calibration, la constante de calibration étant définie de manière à ce que le paramètre x soit compris entre 0 et 1.

Le score S2 permet de quantifier le flou dans l'image. Comme cela sera présenté par la suite à l'étape d), l'image numérique 1 est également considérée comme floue si le score S2 obtenu à l'étape c) est strictement inférieur 14 à un deuxième seuil prédéterminé $S2_0$.

De manière préférée, x correspond à la somme, calculée sur tous les pixels, des paramètres de brillance obtenus à l'étape b), chacun divisé par une constante de calibration, de préférence le maximum de brillance, de manière à être comprise entre 0 et 1 et par le nombre de pixels analysés. À titre d'exemple, le maximum de brillance est égal à 1, dans l'intervalle [0 ;1] ou à 255 dans l'intervalle [0 ;255] selon l'échelle choisie. Le score S2 est calibré pour être compris entre 0 et 1, dans le but de faciliter son interprétabilité et sa comparaison avec d'autres scores. Pour image de 10x10 pixels, le nombre de pixels analysés est égal à 100.

De manière avantageuse, le score S2 présente une non linéarité permettant d'établir une discrimination pertinente au moyen d'un un seuil de flou. En résumé, le deuxième score S2 est calculé à partir de la valeur moyenne de l'intensité lumineuse des bords de l'image qui a été calibrée. La fonction logistique permet un recentrage pertinent pour un coût calculatoire limité.

Les paramètres V, A, C, Q, K, B, M peuvent être issus de calculs théoriques et affinés par l'expérience. De manière préférée :

- le paramètre V est compris entre 0.5 et 100, de préférence, entre 0.8 et 1.2, de préférence encore entre 0.9 et 1.1.
- le paramètre A est compris entre -5 et 5, de préférence, entre -0.2 et 0.2, de préférence encore entre -0.1 et 0.1.
- le paramètre C est compris entre 0 et 100, de préférence, entre 0.9 et 1.1, de préférence encore entre 0.98 et 1.02.
- le paramètre Q est compris entre 0.1 et 10, de préférence, entre 0.8 et 1.2, de préférence entre 0.9 et 1.1.
- le paramètre K est compris entre -2 et 4.5, de préférence, entre 0.8 et 1.2, de préférence encore entre 0.9 et 1.1.
- le paramètre B est compris entre 0.1 et 1000, de préférence, entre 8 et 12, de préférence encore entre 9 et 11.
- le paramètre M est compris entre 0 et 0.999, de préférence, entre 0 et 0.06, de préférence encore entre 0.027 et 0.033.

Ces plages sont des plages préférées pour le flou de type « analogique », en ce sens que les scores S1 et S2 conduisent alors, sur un grand nombre d'images tests, à des résultats conformes à ce que l'œil humain considère comme flou ou net.

Parmi les fonctions logistiques f(x), la fonction sigmoïde fs(x) est avantageuse en termes de rapidité et de pertinence.

Une fonction sigmoïde fs(x) est une fonction logistique f(x) dont les paramètres sont définis de manière suivante :

- le paramètre V est égal à 1
- le paramètre A est égal à 0
- le paramètre C est égal à 1
- le paramètre Q est égal à 1

La fonction sigmoïde $f_s(x)$ est définie de manière suivante

$$fs(x) = \frac{K}{(1 + e^{-B(x-M)})}$$

dans laquelle

- le paramètre K est une constante d'asymptote maximale,
- le paramètre B est une constante de pré-amplification et
- le paramètre M est une constante d'initialisation

De manière préférée :

- le paramètre K est compris entre 0.8 et 1.2, de préférence entre 0.9 et 1.1.
- le paramètre B est compris entre 8 et 12, de préférence entre 9 et 11.
- le paramètre M est compris entre 0 et 0.06, de préférence entre 0.027 et 0.033.

De manière avantageuse, le score S2 mesure la qualité moyenne d'une image. Il est utilisé en combinaison avec d'autres mesures, qui jugent entre autres, de la qualité des meilleurs endroits de l'image.

Et à l'étape d), l'image numérique est également considérée comme floue si le score S2 obtenu à l'étape c) est strictement inférieur à un deuxième seuil prédéterminé $S2_0$, le score S2 fournissant en outre une deuxième quantité de flou présente dans l'image numérique. Ce paramètre, ou score, S2 vient compléter le premier score S1. Pour être considérée comme nette, l'image doit en outre posséder un score S2 supérieur ou égal à un deuxième seuil prédéterminé $S2_0$. Les mêmes remarques d'interprétation, faites pour le calcul du score S1 et le premier seuil prédéterminé, s'appliquent au calcul du score S2 et au deuxième seuil. En particulier, le score S2 peut être la formule exprimée ci-dessus, ou bien une fonction monotone de cette formule.

Le deuxième seuil prédéterminé $S2_0$ peut être issu de calculs théoriques et affiné par l'expérience. Le score S2 donne en général une quantification plus fine du flou présent dans l'image numérique que le premier score S1. On peut par exemple utiliser le score S1 en « tout ou rien », c'est-à-dire décider que l'image est floue ou nette sur la base du premier score S1. On peut utiliser le score S2 comme une quantification du flou.

De manière préférée, le paramètre de brillance et le score S2 étant exprimés en pourcentage et le deuxième seuil prédéterminé $S2_0$ est compris entre 0% et 100%, de préférence, entre 50% et 100%, de préférence encore entre 70% et 90%.

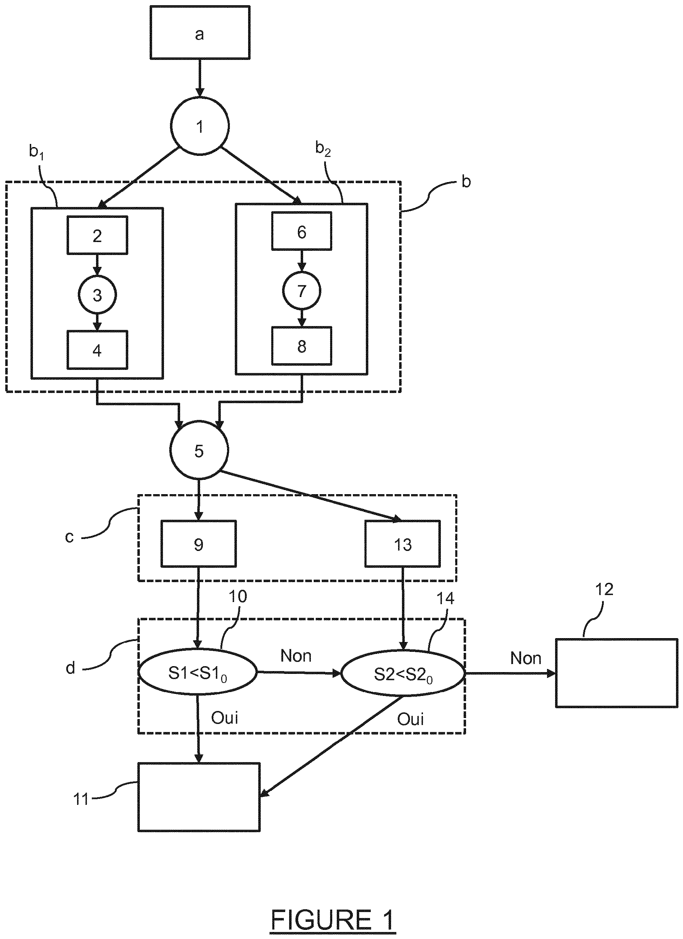

La figure 1 illustre une méthode de détection et de quantification du flou dans une image numérique conforme à l'invention.

L'étape a) consiste à obtenir une image numérique 1, par exemple à l'aide d'une caméra ou d'un appareil photo numériques. L'image peut par exemple avoir 512 X 512 pixels et être codée en TSB (teinte, saturation, brillance). Les paramètres de codage peuvent être exprimés de manière absolue, ou bien en pourcentage. 100% signifie que le paramètre est à son maximum sur une échelle prédéterminée (par exemple de 0 à 255).

Puis on réalise une étape b) de traitement d'image. Dans l'exemple, elle est de type b2). On commence par extraire (sous-étape 6) une valeur de brillance pour chaque pixel à partir de l'image numérique 1. Ainsi, pour chaque pixel, on a les paramètres T, S, B du codage colorimétrique et on ne conserve que le paramètre B. On obtient une matrice de brillance 7. Cette matrice de brillance 7 est convoluée (sous-étape 8) avec une matrice de détection de bords MDB, par exemple celle dite de Laplace, matrice 3x3 qui a la forme suivante :

$$MDB = \begin{matrix} -1 & -1 & -1 \\ -1 & 8 & -1 \\ -1 & -1 & -1 \end{matrix}$$

Ceci revient, en chaque endroit de l'image de brillance représentée par la matrice 7, à calculer un genre de laplacien des valeurs de brillance. Les bords contenus dans l'image résultat ont une valeur de brillance nulle.

De manière alternative, on peut utiliser une matrice de Sobel comme matrice de détection de bords. Dans ce cas :

$$MDB = \begin{matrix} -2 & -2 & 0 \\ -2 & 0 & +2 \\ 0 & +2 & +2 \end{matrix}$$

On peut aussi utiliser des combinaisons linéaires (ou des rotations par multiples de pi/4) des matrices de Laplace et de Sobel, ou de leurs matrices transposées.

Le résultat de la convolution est une nouvelle matrice 5 (ou image) qui comporte un paramètre de brillance par pixel. Cette image est détourée par l'effet de la convolution.

Ensuite, à étape c), on calcule (sous-étape 9) le score S1. C'est le maximum sur tous les pixels du paramètre de brillance obtenu à l'issue des étapes b1) ou b2) (dans l'exemple, l'étape b2).

A l'étape d), on utilise le ou les résultats obtenus à l'étape c). La méthode utilise le score S1 défini ci-dessus (critère 10). S'il est supérieur ou égal à ce premier seuil prédéterminé $S1_0$, l'image numérique 1 est considérée comme nette (cas 12). S'il est strictement inférieur à un premier seuil prédéterminé $S1_0$ (par exemple 98%), le score S2 doit être calculé pour quantifier le flou et déterminer s'il est acceptable. Le score S1 permet aussi de quantifier le flou. Plus exactement, plus 1-S1 est grand, plus le flou est grand.

Dans la méthode, l'étape b1) représente une alternative possible à l'étape b2). Dans l'étape b1), on part toujours de l'image numérique 1 représentable par une matrice. On commence par convoluer (sous-étape 2) cette matrice 1 avec la matrice de détection de bords MDB. Ainsi, la convolution porte sur tous les paramètres de l'image numérique et non seulement la brillance. On obtient une image de détection de bords 3. Ensuite, sous-étape 4, on extrait pour chaque pixel, à partir de l'image de détection de bords 3, un paramètre de brillance par pixel, ce qui forme la matrice 5. L'étape b2) est une alternative à l'étape b1), qui en général requiert moins de calculs. Pour examiner une série d'images, on s'en tient en général à l'une ou l'autre des étapes b1) ou b2), pour des raisons d'homogénéité de traitement. Dit autrement, on choisit b1) ou b2) une fois pour toutes lorsqu'on examine une série d'images.

Dans la méthode, à l'étape c), on calcule (sous-étape 13) la fonction sigmoïde f(x)

$$f(x) = \frac{K}{(1 + e^{-B(x-M)})}$$

La fonction sigmoïde f(x) est calculée pour une valeur x correspondant à la somme, calculée sur tous les pixels, des paramètres de brillance obtenus à l'étape b), chacun divisé par le maximum de brillance (1, dans l'intervalle [0 ;1] ou 255 dans l'intervalle [0 ;255] par exemple, selon l'échelle choisie) ainsi que par le nombre de pixels analysés. Le deuxième score S2 est ainsi compris entre 0 et 1 et est exprimé en pourcentage.

Il va de soi que d'autres fonctions sigmoïdes ou d'autres fonctions logistiques pourraient convenir. Il a été présenté la fonction sigmoïde qui présente les meilleurs résultats avec la plus grande rapidité.

A l'étape d), on compare (test 14) le score S2 à un deuxième seuil prédéterminé $S2_0$ (par exemple 75%). Pour qu'une image soit considérée comme nette, il faut que S1 soit supérieur ou égal à $S1_0$ et que S2 soit supérieur ou égal à $S2_0$ (cas 12). A contrario, si S1 est strictement inférieur à $S1_0$ ou S2 est strictement inférieur à $S2_0$ (cas 11), l'image est considérée comme floue. S1 et S2 quantifient le flou (ou bien 1-S1 et 1-S2). On pourrait aussi calculer un score comprenant ces deux scores, par exemple une norme du vecteur (S1, S2).

Le calcul conjoint du premier score S1 et du deuxième score S2 permet ainsi de détecter si une image est :

- totalement nette : dans ce cas, S1 et S2 sont supérieurs ou égaux à leurs seuils prédéterminés respectifs $S1_0$ et $S2_0$ ;
- partiellement nette, c'est-à-dire qu'il existe au moins une zone nette dans l'image et le reste de l'image est flou : dans ce cas, S1 est supérieur ou égal à $S1_0$ et S2 est strictement inférieur à $S2_0$ ;
- totalement floue : dans ce cas, S1 et S2 sont strictement inférieurs à leurs seuils prédéterminés respectifs $S1_0$ et $S2_0$.

Les valeurs exactes de S1 et S2 utilisées conjointement permettent également d'ordonner des images en fonction de leur niveau de netteté (ou de leur niveau de flou).

En particulier, les valeurs de S1 et S2 sont nécessaires pour déterminer qu'une image est partiellement nette, c'est-à-dire qu'elle contient à la fois au moins une zone nette et au moins une zone floue.

Une méthode selon l'invention a été appliquée à aux figures 1 à 3 avec les paramètres suivants :

- le paramètre K est égal à 1,
- le paramètre B est égal à 10,
- le paramètre M est égal à 0.03,
- le deuxième seuil prédéterminé $S2_0$ de 75% ;
- S1 a été calculé en utilisant une étape b) de type b2) avec un premier seuil prédéterminé $S1_0$ de 98%.

Les résultats suivants ont été obtenus :

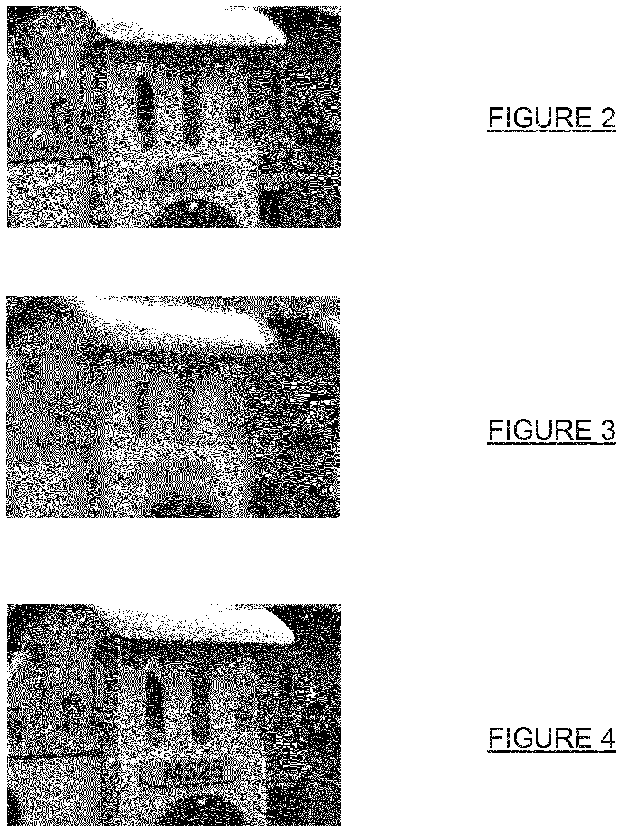

- image 1 partiellement nette (Figure 2) : score S1 de 100%, score S2 de 65,93%,
- image 2 floue (Figure 3) : score S1 de 49%, score S2 de 51,62%,
- image 3 nette (Figure 4) : score S1 de 100%, score S2 de 76,53%,

Il s'ensuit que l'image 3 (Figure 4) est détectée comme nette du point de vue du score S2 (S2 est supérieur ou égal au deuxième seuil prédéterminé $S2_0$ qui est de 75%) comme de celui du score S1 (S1 est supérieur ou égal au premier seuil prédéterminé $S1_0$ qui est de 98%). La quantité de flou dans l'image 3 est donnée par les scores S1 et S2. Au contraire, pour l'image 2 (Figure 3), le score S2 est strictement inférieur au deuxième seuil prédéterminé et S1 est strictement inférieur au premier seuil prédéterminé. L'image 2 (Figure 3) est donc détectée comme floue. La quantité de flou dans l'image 2 est donnée par les scores S1 et S2. On peut aussi, si l'on préfère, exprimer la quantité de flou par 1-S1 et 1-S2, pour avoir des quantités qui croissent à mesure que le flou est plus important. De même, l'image 1 (Figure 2) est détectée comme nette du point de vue du score S1 (S1 est supérieur ou égal au premier seuil prédéterminé $S1_0$) mais le score 2 révèle une quantité de flou importante (S2 est inférieur ou égal au deuxième seuil prédéterminé

S2$_0$). Autrement dit, l'image 1 est considérée comme floue du point de vue du score S2 mais nette du point de vue du score S1. On peut aussi en déduire que pour les images 1 et 2, la focalisation n'est pas adaptée et que les images sont floues.

## Revendications

1. Méthode de détection et de quantification du flou dans une image numérique (1) mettant en œuvre un ordinateur et comprenant :

   - une étape a) d'obtention d'une image numérique (1) comprenant des pixels et des paramètres de codage colorimétrique associés aux pixels ;
   - une étape b) d'obtention d'un paramètre de brillance (5) pour chaque pixel à partir de l'image numérique (1), l'étape b) comprenant une opération de convolution (2, 8) avec une matrice de détection de bords (MDB) ;
   - une étape c) de calcul (9) d'un score S1 comprenant le maximum, calculé sur tous les pixels, du paramètre de brillance (5) obtenu à l'étape b) ; et
   - une étape d) d'évaluation de l'image numérique, l'image numérique étant considérée comme floue si le score S1 obtenu à l'étape c) est strictement inférieur (10) à un premier seuil prédéterminé S1$_0$, le score S1 fournissant une première quantité de flou (11) présente dans l'image numérique, **méthode caractérisée en ce que** :
   - à l'étape c), on calcule (13) un score S2 comprenant une fonction logistique f(x) définie de manière suivante

$$f(x) = A + \frac{K - A}{(C + Qe^{-B(x-M)})^{1/V}}$$

   dans laquelle

   - le paramètre V est une constante de croissance maximale,
   - le paramètre A est une constante d'asymptote minimale,
   - le paramètre C est une constante de décalage,
   - le paramètre Q est une constante de post-amplification,
   - le paramètre K est une constante d'asymptote maximale,
   - le paramètre B est une constante de pré-amplification,
   - le paramètre M est une constante d'initialisation,
   - x correspond à la somme, calculée sur tous les pixels, des paramètres de brillance obtenus à l'étape b), chacun divisé par une constante de calibration et par le nombre de pixels analysés, la constante de calibration étant définie de manière à ce que le paramètre x soit compris entre 0 et 1,
   - à l'étape d), l'image numérique (1) est également considérée comme floue si le score S2 obtenu à l'étape c) est strictement inférieur (14) à un deuxième seuil prédéterminé S2$_0$, le score S2 fournissant en outre une deuxième quantité (11) de flou présente dans l'image numérique.

2. Méthode selon la revendication 1, **caractérisée en ce que** la fonction logistique f(x) est une fonction sigmoïde fs(x) définie de manière suivante :

$$fs(x) = \frac{K}{(1 + e^{-B(x-M)})}$$

3. Méthode selon la revendication 2, **caractérisée en ce que** les paramètres de la fonction sigmoïde fs(x) sont définis de manière suivante :

   - K est compris entre 0.1 et 4.5, de préférence, entre 0.8 et 1.2
   - B est compris entre 0.1 et 1000, de préférence, entre 8 et 12
   - M est compris entre 0 et 0.999, de préférence, entre 0 et 0.06.

4. Méthode selon la revendication 2, **caractérisée en ce que** les paramètres de la fonction sigmoïde fs(x) sont définis de manière suivante :

- K est compris entre 0.9 et 1.1
- B est compris entre 9 et 11
- M est compris entre 0.027 et 0.033.

**5.** Méthode selon l'une des revendications 1 à 4, **caractérisé en ce que** la constante de calibration est le maximum de brillance.

**6.** Méthode selon l'une quelconque des revendications 1 à 5, **caractérisée en ce que** l'image numérique (1) est considérée comme totalement nette si les scores S1 et S2 sont supérieurs ou égaux à leurs seuils prédéterminés respectifs $S1_0$ et $S2_0$, comme partiellement nette si le score S1 est supérieur ou égal au premier seuil prédéterminé $S1_0$ et le score S2 est strictement inférieur au deuxième seuil prédéterminé $S2_0$, ou comme totalement floue si les scores S1 et S2 sont strictement inférieurs à leurs seuils prédéterminés respectifs $S1_0$ et $S2_0$.

**7.** Méthode selon l'une quelconque des revendications 1 à 6, **caractérisée en ce que** le deuxième score S2 étant exprimé en pourcentage, le deuxième seuil prédéterminé $S2_0$ est compris entre 0% et 100%, de préférence entre 50% et 100%, de préférence encore entre 70% et 90%.

**8.** Méthode selon l'une quelconque des revendications 1 à 7, **caractérisée en ce que** le paramètre de brillance (5) est la brillance au sens du codage « teinte, saturation, brillance » (TSB).

**9.** Méthode selon l'une quelconque des revendications 1 à 8, **caractérisée en ce que**, le paramètre de brillance (5) et le score S1 étant exprimés en pourcentage, le premier seuil prédéterminé $S1_0$ est compris entre 90% et 100%, de préférence entre 95% et 99,5%.

**10.** Méthode selon l'une quelconque des revendications 1 à 9, **caractérisée en ce qu'**on ordonne des images en fonction de leur niveau de flou en utilisant conjointement les valeurs exactes des scores S1 et S2.

**11.** Produit de type programme d'ordinateur, comprenant au moins une séquence d'instructions stockée et lisible par un processeur et qui, une fois lue par ce processeur, provoque la réalisation des étapes b), c) et d) de la méthode selon l'une quelconque des revendications précédentes sur une image numérique (1) comprenant des pixels et des paramètres de codage colorimétrique associés aux pixels.

**12.** Support lisible par un ordinateur comportant le produit selon la revendication 11.

**Patentansprüche**

**1.** Verfahren zur Detektion und Quantifizierung von Unschärfe auf einem Digitalbild (1), das auf einem Computer implementiert wird, und welches Folgendes umfasst:

- einen Schritt a) des Erhaltens eines Digitalbildes (1), welches Pixel und Parameter zur Farbcodierung umfasst, die den Pixeln zu geordnet sind;
- einen Schritt b) des Erhaltens eines Helligkeitsparameters (5) für jedes Pixel ausgehend von dem Digitalbild (1), wobei der Schritt b) einen Konvolutionsvorgang (2, 8) mit einer Randdetektionsmatrix (RDM) umfasst;
- einen Schritt c) des Berechnens (9) einer Punktezahl S1, umfassend das über alle Pixel berechnete Höchstmaß des im Schritt b) erhaltenen Helligkeitsparameters (5); und
- einen Schritt d) des Bewertens des Digitalbildes, wobei das Digitalbild als unscharf angenommen wird, wenn die im Schritt c) erhaltene Punktezahl S1 streng kleiner (10) als ein erster vorbestimmter Schwellenwert $S1_0$ ist, wobei die Punktezahl S1 eine erste Unschärfemenge (11) bereitstellt, die auf dem Digitalbild vorhanden ist, **wobei das Verfahren dadurch gekennzeichnet ist, dass:**
- im Schritt c) eine Punktezahl S2 berechnet (13) wird, die eine logistische Funktion f(x) umfasst, die wie folgt definiert ist

$$f(x) = A + \frac{K - A}{(C + Qe^{-B(x-M)})^{1/V}}$$

wobei

- der Parameter V eine maximale Wachstumskonstante ist,
- der Parameter A eine Mindest-Asymptoten-Konstante ist,
- der Parameter C eine Versatzkonstante ist,
- der Parameter Q eine Nachverstärkungskonstante ist,
- der Parameter K eine maximale Asymptoten-Konstante ist,
- der Parameter B eine Vorverstärkungskonstante ist,
- der Parameter M eine Initialisierungskonstante ist,
- x der über alle Pixel berechneten Summe der im Schritt b) erhaltenen Helligkeitsparameter entspricht, jeweils durch eine Kalibrierungskonstante und durch die Anzahl an analysierten Pixeln geteilt, wobei die Kalibrierungskonstante derart definiert ist, dass der Parameter x zwischen 0 und 1 enthalten ist,
- im Schritt d) das Digitalbild (1) ebenfalls als unscharf angenommen wird, wenn die im Schritt c) erhaltene Punktezahl S2 streng kleiner (14) ist, als ein zweiter vorbestimmter Schwellenwert $S2_0$, wobei die Punktezahl S2 weiter eine zweite Menge (11) an Unschärfe bereitstellt, die auf dem Digitalbild vorhanden ist.

2. Verfahren nach Anspruch 1, **dadurch gekennzeichnet, dass** die logistische Funktion f(x) eine Sigmoidfunktion fs(x) ist, die wie folgt definiert ist:

$$fs(x) = \frac{K}{(1 + e^{-B(x-M)})}$$

3. Verfahren nach Anspruch 2, **dadurch gekennzeichnet, dass** die Parameter der Sigmoidfunktion fs(x) wie folgt definiert sind:

  - K ist zwischen 0,1 und 4,5, vorzugsweise zwischen 0,8 und 1,2 enthalten
  - B ist zwischen 0,1 und 1000, vorzugsweise zwischen 8 und 12 enthalten
  - M ist zwischen 0 und 0,999, vorzugsweise zwischen 0 und 0,06 enthalten.

4. Verfahren nach Anspruch 2, **dadurch gekennzeichnet, dass** die Parameter der Sigmoidfunktion fs(x) wie folgt definiert sind:

  - K ist zwischen 0,9 und 1,1 enthalten
  - B ist zwischen 9 und 11 enthalten
  - M ist zwischen 0,027 und 0,033 enthalten.

5. Verfahren nach einem der Ansprüche 1 bis 4, **dadurch gekennzeichnet, dass** die Kalibrierungskonstante das Höchstmaß an Helligkeit ist.

6. Verfahren nach einem der Ansprüche 1 bis 5, **dadurch gekennzeichnet, dass** das Digitalbild (1) als vollkommen scharf angenommen wird, wenn die Punktzahlen S1 und S2 größer als oder gleich den jeweiligen vorbestimmten Schwellenwerten $S1_0$ und $S2_0$ sind, als teilweise scharf, wenn die Punktezahl S1 größer als oder gleich dem ersten vorbestimmten Schwellenwert $S1_0$ ist und die Punktezahl S2 streng kleiner als der zweite vorbestimmte Schwellenwert $S2_0$ ist, oder als vollkommen unscharf, wenn die Punktezahlen S1 und S2 streng kleiner als ihre jeweiligen vorbestimmten Schwellenwerte $S1_0$ und $S2_0$ sind.

7. Verfahren nach einem der Ansprüche 1 bis 6, **dadurch gekennzeichnet, dass**, da die zweite Punktezahl S2 in Prozenten ausgedrückt wird, der zweite vorbestimmte Schwellenwert $S2_0$ zwischen 0% und 100%, vorzugsweise zwischen 50% und 100%, noch bevorzugter zwischen 70% und 90% enthalten ist.

8. Verfahren nach einem der Ansprüche 1 bis 7, **dadurch gekennzeichnet, dass** der Helligkeitsparameter (5) die Helligkeit im Sinne der Codierung "Farbwert, Sättigung, Helligkeit" (HSB) ist.

9. Verfahren nach einem der Ansprüche 1 bis 8, **dadurch gekennzeichnet, dass**, da der Helligkeitsparameter (5) und die Punktezahl S1 in Prozenten ausgedrückt wird, der erste vorbestimmte Schwellenwert $S1_0$ zwischen 90% und 100%, vorzugsweise zwischen 95% und 99,5% enthalten ist.

10. Verfahren nach einem der Ansprüche 1 bis 9, **dadurch gekennzeichnet, dass** Bilder in Abhängigkeit von ihrer Unschärfestufe durch die gemeinsame Verwendung der genauen Werte der Punktezahlen S1 und S2 geordnet werden.

11. Produkt vom Typ Computerprogramm, das mindestens eine Sequenz an Anweisungen umfasst, die gespeichert, und durch einen Prozessor lesbar ist, und die, sobald sie von diesem Prozessor gelesen wird, für die Implementierung der Schritte b), c) und d) des Verfahrens nach einem der vorstehenden Ansprüche auf einem Digitalbild (1) sorgt, welches Pixel und Parameter zur Farbcodierung umfasst, die den Pixeln zu geordnet sind.

12. Durch einen Computer lesbarer Support, der das Produkt nach Anspruch 11 beinhaltet.

**Claims**

1. Method of detecting and quantifying blur in a digital image (1), implemented on a computer and comprising:

   - a step a) of obtaining a digital image (1) comprising pixels and colorimetric coding parameters associated with the pixels;
   - a step b) of obtaining a brightness parameter (5) for each pixel from the digital image (1), said step b) comprising a convolution operation (2, 8) with an edge detection matrix (EDM);
   - a step c) of calculating (9) a score S1 comprising the maximum, calculated over all the pixels, of the brightness parameter (5) obtained in step b); and
   - a step d) of evaluating the digital image, said digital image being considered to be blurry if the score S1 obtained in step c) is strictly less (10) than a first predetermined threshold $S1_0$, the score S1 providing a first quantity of blur (11) present in the digital image, **method characterized in that:**
   - in step c), a score S2 is calculated (13) comprising a logistic function f(x) defined as follows

$$f(x) = A + \frac{K - A}{(C + Qe^{-B(x-M)})^{1/V}}$$

   in which

   - the parameter V is a maximum growth constant,
   - the parameter A is a minimal asymptote constant,
   - the parameter C is an offset constant,
   - the parameter Q is a post-amplification constant,
   - the parameter K is a maximal asymptote constant,
   - the parameter B is a pre-amplification constant,
   - the parameter M is an initialization constant,
   - x corresponds to the sum, calculated on all the pixels, of the brightness parameters obtained in step b), each of them divided by a calibration constant and by the number of pixels analyzed, the calibration constant is defined so that the parameter x is between 0 and 1,
   - in step d), the digital image (1) is also considered to be blurry if the score S2 obtained in step c) is strictly less (14) than a second predetermined threshold $S2_0$, the score S2 additionally providing a second quantity (11) of blur present in the digital image.

2. Method according to Claim 1, **characterized in that** the logistic function f(x) is a sigmoid function fs(x) defined as follows:

$$fs(x) = \frac{K}{(1 + e^{-B(x-M)})}$$

3. Method according to Claim 2, **characterized in that** the parameters of sigmoid function fs(x) are defined as follows:

   - K is between 0.1 and 4.5, preferably between 0.8 and 1.2
   - B is between 0.1 and 1000, preferably between 8 and 12
   - M is between 0 and 0.999, preferably between 0 and 0.06.

4. Method according to Claim 2, **characterized in that** the parameters of sigmoid function fs(x) are defined as follows:

   - K is between 0.9 and 1.1
   - B is between 9 and 11
   - M is between 0.027 and 0.033.

5. Method according to one of claims 1 to 4, **characterized in that** the calibration constant is the maximum brightness.

6. Method according to any one of Claims 1 to 5, **characterized in that** the digital image (1) is considered to be totally sharp if the scores S1 and S2 are greater than or equal to their respective predetermined thresholds $S1_0$ and $S2_0$, as partially sharp if the score S1 is greater than or equal to the first predetermined threshold $S1_0$ and the S2 score is strictly less than the second predetermined threshold $S2_0$, or as totally blurry if the scores S1 and S2 are strictly less than their respective predetermined thresholds $S1_0$ and $S2_0$.

7. Method according to any one of Claims 1 to 6, **characterized in that** the second score S2 being expressed as a percentage, the second predetermined threshold $S2_0$ is between 0% and 100%, preferably between 50% and 100%, more preferably between 70% and 90%.

8. Method according to any one of Claims 1 to 7, **characterized in that** the brightness parameter (5) is the brightness within the meaning of the "hue, saturation, brightness" (HSB) coding.

9. Method according to any one of Claims 1 to 8, **characterized in that** the brightness parameter (5) and the score S1 being expressed as percentages, the first predetermined threshold $S1_0$ is between 90% and 100%, preferably between 95% and 99.5%.

10. Method according to any one of Claims 1 to 9, **characterized in that** images are ordered according to their level of blur by jointly using the exact values of the scores S1 and S2.

11. Product of computer program type, comprising at least one sequence of instructions stored and readable by a processor and which, once read by this processor, causes the implementation of steps b), c) and d) of the method according to any of the Claims above on a digital image (1) comprising pixels and colorimetric coding parameters associated with the pixels.

12. A computer readable medium comprising the product according to Claim 11.

FIGURE 1

FIGURE 2

FIGURE 3

FIGURE 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20030151674 A

- WO 2012080643 A

**Littérature non-brevet citée dans la description**

- **HANGHANG TONG ; MINGJING LI ; HONGJIANG ZHANG ; CHANGSHUI ZHANG.** Blur Detection for Digital Images Using Wavelet Transform. *IEEE International Conférence on multimedia and expo : ICME,* 2004
- **TENG ZHANG ; JOHANNA CARVAJAL ; DANIEL F. SMITH ; KUN ZHAO ; ARNOLD WILIEM ; PETER HOBSON ; ANTHONY JENNINGS ; BRIAN C. LOVELL.** *SlideNet: Fast and Accurate Slide Quality Assessment Based on Deep Neural Networks*

- **ALEXANDRE CIANCIO ; ANDRÉ LUIZ N TARGINO TARGINO DA COSTA ; EDUARDO A. B ; DA SILVA ; AMIR SAID ; RAMIN SAMADANI ; PERE OBRADOR.** *No-Reference Blur Assessment of Digital Pictures Based on Multifeature Classifiers*